# EUROPEAN PATENT APPLICATION

(11) **EP 4 560 976 A1**
(43) Date of publication of application: **28.05.2025**
(21) Application number: 23211800.0
(22) Date of filing: 23.11.2023
(51) Int. Cl.: H04L 9/40, H04W 12/02, H04W 12/71, H04W 12/75

(54) **PROCESSING RELATED TO TRUSTED CUSTOMER-PREMISES EQUIPMENT**

(71) Applicant: Cujo LLC, Covina, CA 91723 (US)
(72) Inventor: Mathews, James, 02150 Espoo (FI); Jonkus, Artras, 07152 Vilnius (LT); Niemenmaa, Matti, 02150 Espoo (FI); Semaskevi, Robert, 07152 Vilnius (LT)
(74) Representative: Marks & Clerk LLP

(57) **Abstract**

A customer-premises equipment, CPE receives (112) from a connected device via a first encrypted wireless connection an active media access control, MAC, address and a true MAC address of the connected device. The CPE receives (114) from the connected device via a second wireless connection a data communication that contains the active MAC address of the connected device and omits the true MAC address of the connected device. In response to the CPE detecting (116) that the data communication is addressed to an internal service within the CPE, the CPE associates (118) the true MAC address of the connected device with the data communication, and transmits (120) to the internal service the data communication that contains the active MAC address of the connected device and is associated with the true MAC address of the connected device.

## Description

### FIELD

The invention relates to a method, apparatus, computer program product, and computer-readable medium.

### BACKGROUND

Service delivery for consumers and businesses is impacted by an obfuscation of a connected device operating in a local area network (LAN) implemented by a customer-premises equipment (CPE) of a network service provider (NSP). The CPE-based services are dependent on a Medium/Media Access Control (MAC) address acting as a standardized device identifier. The obfuscation of the connected device is a result of privacy enhancing techniques used by operating systems (OS) of connected devices such as iOS^{®}, Android^{®}, or Windows^{®}. In the so-called MAC address randomization technique, the original vendor-embedded MAC address is changed to a random value. The MAC address randomization causes problems as the services running on the CPE are no longer able to rely on the MAC address as a single source of truth in their service delivery.

Another issue relates to the CPE itself. A malicious actor can spoof the CPE and intercept traffic between the connected device and the CPE. The trustworthiness of the CPE needs to be determined.

### SUMMARY

According to an aspect of the disclosure, there is provided subject matter of independent claims.

One or more examples of implementations are set forth in more detail in the accompanying drawings and the detailed description.

### BRIEF DESCRIPTION OF DRAWINGS

Some examples will now be described with reference to the accompanying drawings, in which:
FIG. 1A, FIG. 1B, and FIG. 1C are flowcharts illustrating examples of methods;
FIG. 2A, FIG. 2B, and FIG. 2C are block diagrams illustrating example implementation environments for the methods;
FIG. 3A and FIG. 3B are sequence charts illustrating communication between various actors of the methods;
FIG. 4A and FIG. 4B are block diagrams illustrating examples of a cybersecurity apparatus;
FIG. 5 is a block diagram illustrating an example of a connected device;
FIG. 6 is a block diagram illustrating an example of a computing resource; and
FIG. 7A and FIG. 7B are block diagrams illustrating examples of a customer-premises equipment.

### DETAILED DESCRIPTION

The following description discloses examples. Although the specification may refer to "an" example in several locations, this does not necessarily mean that each such reference is to the same example(s), or that the feature only applies to a single example. Single features of different examples may also be combined to provide other examples. Words "comprising" and "including" should be understood as not limiting the described examples to consist of only those features that have been mentioned as such examples may contain also features and structures that have not been specifically mentioned. The examples and features, if any, disclosed in the following description that do not fall under the scope of the independent claims should be interpreted as examples useful for understanding various examples and implementations of the invention.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

Device identification, which may be defined as a capability to detect and identify a connected device in a home/office local area network (LAN), increases cybersecurity. Traditionally, the Medium/Media Access Control (MAC) address is assigned by a device manufacturer and used in the data communication (such as with wireless radio signals) within the LAN for the device identification. However, the MAC randomization, which anonymizes and randomizes the MAC address to increase privacy, hinders the device identification based on the MAC address. In the MAC randomization, instead of using the vendor-embedded MAC address, or a randomized MAC address used for an initial registration to services in the customer-premises equipment (CPE), the connected device transmits an active MAC address, which may be a randomized MAC address that is different from the earlier MAC address used for an initial registration to the services in the CPE. The problems caused by the MAC randomization are solved by communicating the active MAC address and the true MAC address of the connected device from the connected device to the CPE via an encrypted connection. The CPE may be detected as trusted in two different ways: using radio frequency fingerprinting of the CPE by the connected device, or by using a third party service.

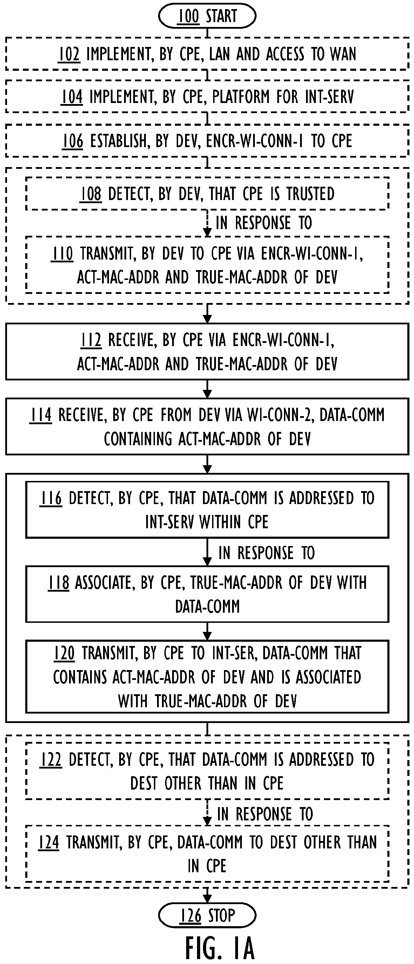

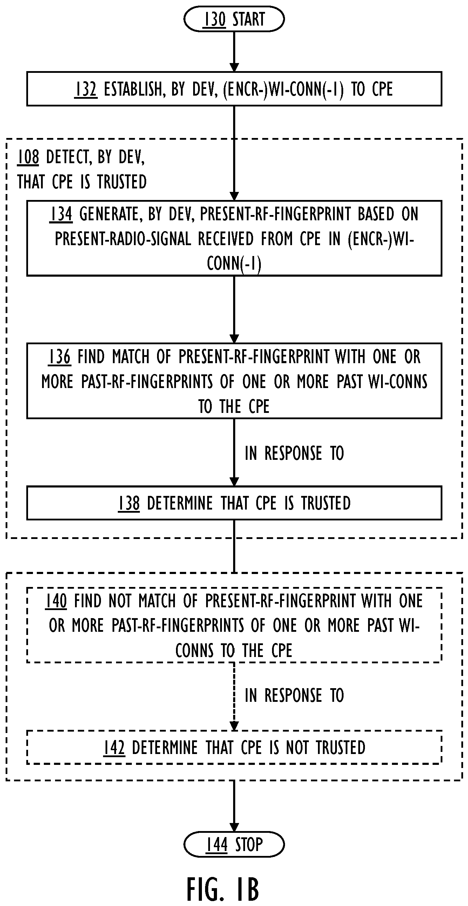

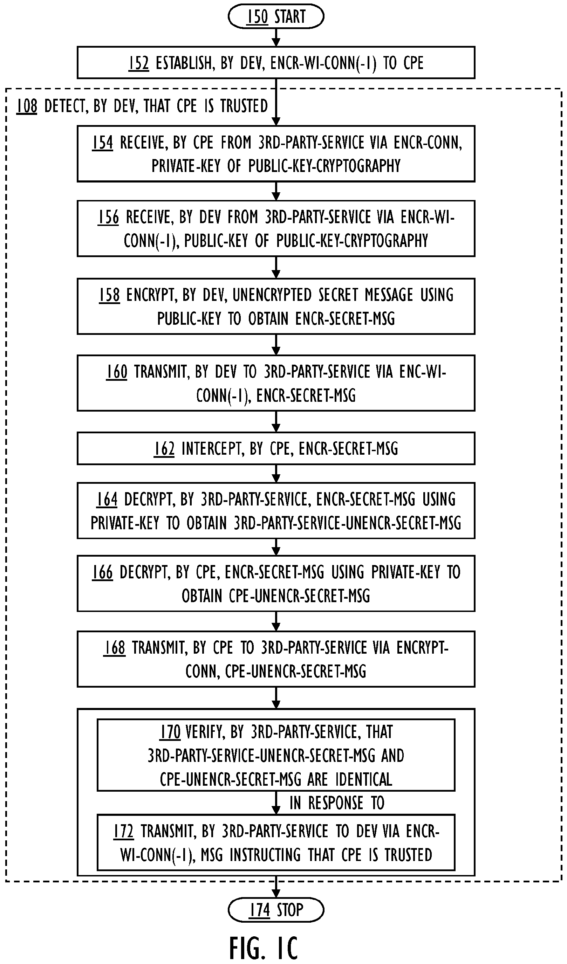

FIG. 1A, FIG. 1B, and FIG. 1C are flowcharts illustrating methods. The method of FIG. 1A performs operations related to the communication of the active MAC address and the true MAC address, FIG. 1B related to the radio frequency fingerprinting of the CPE, and FIG. 1C related to the use of the third party service.

The method of FIG. 1A starts in 100 and ends in 126.

The operations are not strictly in chronological order, i.e., no special order of operations is required, except where necessary due to the logical requirements for the processing order. In such a case, the synchronization between operations may either be explicitly indicated, or it may be understood implicitly by the skilled person. If no specific synchronization is required, some of the operations may be performed simultaneously or in an order differing from the illustrated order. Other operations may also be executed between the described operations or within the described operations, and other data besides the illustrated data may be exchanged between the operations.

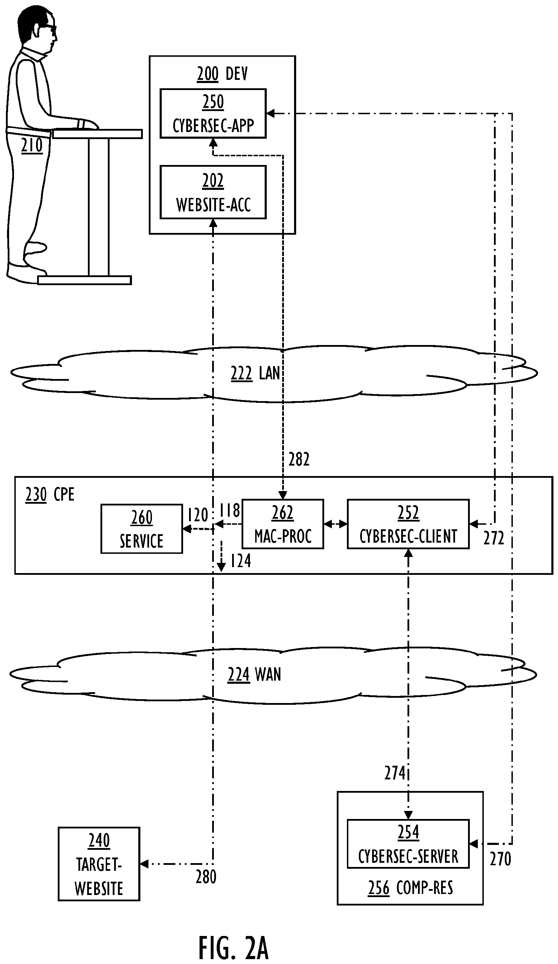

FIG. 2A is a block diagram illustrating an example implementation environment for the method. The method may be a computer-implemented method.

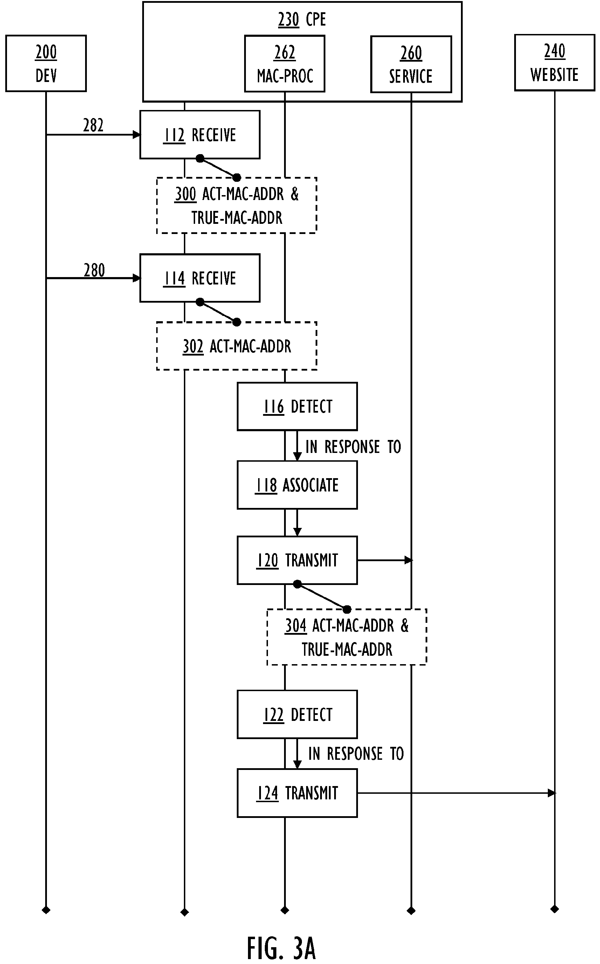

FIG. 3A is a sequence chart illustrating communication between various actors of the method of FIG. 1A.

First, a customer-premises equipment (CPE) 230 receives 112 from a connected device 200 via a first encrypted wireless connection 282 an active MAC address and a true MAC address of the connected device 200. This operation may be repeated as needed in response to the connected device 200 changing its active MAC address: each time the connected device 200 establishes another first encrypted wireless connection 282, both the active MAC address and the true MAC address of the connected device 200 are signaled to the CPE 230. The result is that a MAC processing entity 262 in the CPE 230 then knows and stores both the active MAC address and the true MAC address 300 of the connected device, as a pair for example.

Next, the CPE 230 receives 114 from the connected device 200 via a second wireless connection 280 a data communication that contains the active MAC address of the connected device 200 and omits the true MAC address of the connected device 200. This operation may be repeated as needed: each time the connected device 200 establishes another second wireless connection 280 (other than the first encrypted wireless connection 282) to the CPE 230, the data communication contains the active MAC address of the connected device 200, but not the true MAC address of the connected device 200. The result is that for the second wireless connection 280, the MAC processing entity 262 only knows the active MAC address 302 of the connected device 200.

In response to the CPE 230 detecting 116 that the data communication is addressed to an internal service 260 within the CPE 230, the CPE 230 associates 118 the true MAC address of the connected device 200 with the data communication, and transmits 120 the data communication that contains 304 the active MAC address of the connected device 200 and is associated with the true MAC address of the connected device 200 to the internal service 260. This is made possible by the MAC processing entity 262, which knows the active MAC address and the true MAC address 300 of the connected device 200 based on the first encrypted wireless connection 282, being able to map the active MAC address 302 of the connected device 200 received on the second wireless connection 280 with the true MAC address based on the stored active and true MAC addresses 300 of the connected device 200. The communication of both the active MAC address and the true MAC address to the internal service 260 may use mechanisms described in Applicant's other pending patent applications, EP23162500.5 or US 18/185,741, and EP23173126.6 or US 18/316,378, incorporated herein by reference in all jurisdictions where applicable.

With these five operations 112, 114, 116, 118, and 120, the internal service 260 becomes informed of both the active MAC address and the true MAC address of the connected device 200.

As used herein, the term "connected device" 200 refers to a physical device with communication capabilities.

The CPE 230 is configured to implement 102 a local area network (LAN) 222 for a data communication of the connected device 200, and an access for the data communication to a wide area network (WAN) 224 such as the Internet. In the data communication, the data packets may be transferred from and to the connected device 200.

The CPE 230 is configured to implement 104 a platform for the internal service(s) 260. At least one internal service 260 is configured to register 106 the connected device 200 with the true MAC address.

The active MAC address of the connected device 200 may be a randomized MAC address of the connected device 200. The randomized MAC address of the connected device 200 is different from the true MAC address of the connected device 200 used for an initial registration to the internal service 260 in the CPE 230. The connected device 200 may perform the initial registration to the internal service while the connected device 200 connects to the LAN 222 of the CPE 230 for the first time. The true MAC address of the connected device 200 may be a vendor-embedded MAC address, or a randomized MAC address used for an initial registration to the internal service 260 in the CPE 230. The vendor-embedded MAC address may comprise an organizationally unique identifier (OUI). The OUI comprises the first three bytes of the six-byte MAC address field. The OUI is administered by the Institute of Electrical and Electronics Engineers (IEEE) to identify the connected device 200 as manufactured by a specific vendor.

CPE-embedded operating system internal services 260 typically rely on both MAC and Internet Protocol (IP) addresses. The obfuscation of the MAC address does not cause any direct functional limitation on the operating system itself to perform its designed service. The connected device with a randomized MAC address still receives an IP address and the CPE 230 is still able to process the packets belonging to the connected device, which has received the IP address. The real problem caused by the obfuscation is the ability to rely on a constant identity to consistently apply the same service using the same policy to the same connected device 200, which is recognized by the true MAC address (which may be a manufacturer-embedded MAC address, or a randomized MAC address) used to register to at least one internal service 260.

Let us take an example, a connected device 200, whose original embedded manufacturer MAC address is aa:bb:cc:dd:ee:ff. For a dynamic host configuration protocol (DHCP) lease reservation, the owner or the NSP has defined a policy/rule on the CPE 230 that this MAC address ("true MAC address"), which belongs to this specific connected device 200, should always get the IP address 192.168.1.72. With this reserved IP address, the owner or the NSP applies specific policies/rules based on the IP address for services like port forwarding, firewall, content filter, etc. Every time the connected device 200 reconnects with the LAN 222 of the CPE 230, the connected device 200 is ensured to receive the same IP address. The DHCP lease reservation record on the LAN 222 of the CPE 230 is 192.168.1.72 = aa:bb:cc:dd:ee:ff. The OS privacy function of the connected device 200 may randomize the MAC address to a new unique address: 00:00:aa:00:00:aa. This causes that the next time the connected device 200 re-connects to the LAN 222 of the CPE 230, the connected device 200 will receive an IP address from the DHCP pool, 192.168.1.34, for example. The previously applied policies/rules like DHCP lease reservation, port forwarding, firewall, or content filter cannot any longer be applied to the connected device 200 as it has received a different IP address ("active MAC address"). All CPE 230 network policies and services relying on the MAC address, or the combination of the MAC address and the IP address for the connected device 200 are impacted by the randomization of the MAC address. The operations 112, 114, 116, 118, and 120 provide an architecture, which enables the CPE 230 OS and its local or third party internal services 260 to be aware of both the active MAC address and the true MAC address.

If the data communication is addressed to a destination other than in the CPE 230, i.e., the data communication is not addressed to the internal service 260, a standard way of operation may be employed. The other destination may be outside of the CPE 230. In response to the CPE 230 detecting 122 that the data communication is addressed to the destination other than in the CPE 230, the CPE 230 transmits 124 the data communication to the destination other than in the CPE 230.

In an example, the CPE 230 needs to be detected as trusted before the operation 112 is performed. This may be implemented so that first the connected device 200 establishes 106 the first encrypted wireless connection 282 to the CPE 130, and in response to the connected device 200 detecting 108 that the CPE is trusted, the connected device 200 transmits 110 via the first encrypted wireless connection 282 the active MAC address and the true MAC address of the connected device 200 to the CPE 230, whereupon the reception operation 112 may be performed by the CPE 230.

For the detection 108 by the connected device 200 that the CPE 230 is trusted, two different methods may be used: FIG. 1B describes the use of the radio frequency fingerprinting of the CPE 230 by the connected device 200, and FIG. 1C describes the use of the third party service 290.

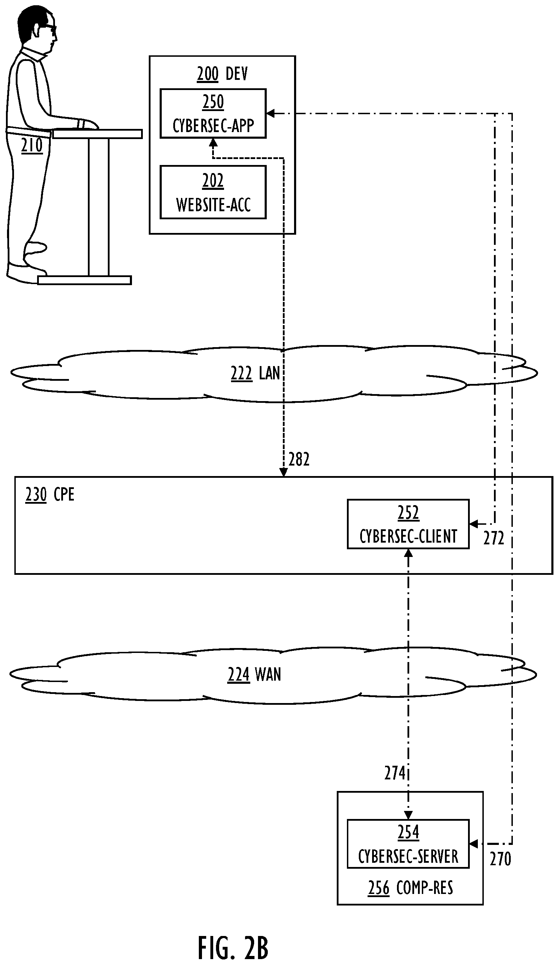

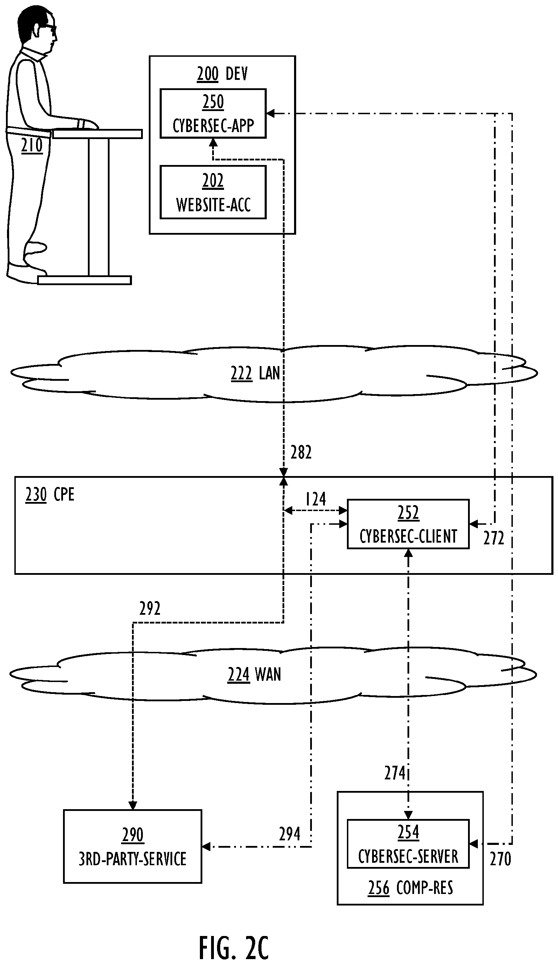

As the methods of FIG. 1B and FIG. 1C may operate independently of the method of FIG. 1A, each one of them is also explained with reference to stand-alone implementation environments of FIG. 2B and FIG. 2C.

If the method of FIG. 1B is part of the method of FIG. 1A, the operations 132, 134, 136, 138, 140, and 142 are performed within the operation 108 and before the operation 110.

But, if the method of FIG. 1B is a stand-alone method, it starts in 130 and ends in 144.

First, the connected device 230 establishes 132 a wireless connection 282 to the CPE 230. For the method of FIG. 1A, this operation is implemented by the operation 106: the connected device 200 establishes 106 the first encrypted wireless connection 282 to the CPE 130.

Next, the connected device 200 generates 134 a present radio frequency fingerprint based on a present radio signal received from the CPE via the (first encrypted) wireless connection 282.

In response to finding 136 a match of the present radio frequency fingerprint with one or more past radio frequency fingerprints of one or more past wireless connections to the CPE 230, it is determined 138 that the CPE 230 is trusted. Or, in response to not finding 140 a match of the present radio frequency fingerprint with one or more past radio frequency fingerprints of one or more past wireless connections to the CPE 230, it is determined 142 that the CPE 230 is not trusted. In other words, it is either a match or a mismatch between the present and past radio frequency fingerprints.

Various aspect of the radio frequency fingerprinting are described in the following patent publications, incorporated herein by reference in all jurisdictions where applicable: US 10,594,727 B2, US 10,693,576 B2, US 10,742,461 B2, US 10,749,898 B2, and US 2022/0399920 A1. The radio frequency fingerprinting may be implemented so that the present radio signal, which is transmitted from the CPE 230 via the present wireless connection 282, is received by the connected device 200. A present radio frequency fingerprint is then generated 134 based on the received present radio signal.

Carrier frequency offset (CFO) is a phenomenon caused by a frequency difference between a frequency generated by a local oscillator in a transmitter of the CPE 230, and a frequency generated by a local oscillator in a receiver of the connected device 200. The frequency difference causes that the local oscillator signal for down-conversion in the receiver does not synchronize with the carrier signal contained in the received signal. Besides the frequency mismatch, the Doppler effect may also cause the carrier frequency offset as the connected device 200 with the transmitter is moving, whereas the CPE 230 with the receiver is stationary. The carrier frequency offset causes that the received radio signal is shifted in frequency. In an orthogonal frequency-division multiplexing (OFDM) radio system, the carrier frequency offset must be kept within certain limits so that the orthogonality among sub-carriers can be maintained. Otherwise, inter-carrier interference (ICI) may be caused into the radio signal. In practice, the local oscillators never oscillate at exactly the same frequency. Telecommunication system standards usually set a requirement for the precision of the local oscillator. In the IEEE 802.11 standard for wireless local area network (WLAN), the local oscillator precision tolerance is specified as less than ±20 parts per million (ppm), whereby the resulting carrier frequency offset caused by frequency difference is in the range from -40 ppm to +40 ppm. If the carrier frequency is 2.4 GHz, for example, then the local oscillator tolerance is ±48 kHz, and the maximum carrier frequency offset ±96 kHz. In comparison, the Doppler effect is in the magnitude of hundreds of hertz, i.e., much less than the oscillator generated mismatch. The local oscillators may provide a single reference frequency to a frequency synthesizer.

Besides the carrier frequency offset, radio frequency and analog parts of the radio transmitter in the CPE 230 and radio frequency and analog parts in the radio receiver in the connected device 200 may cause other distortions into the present radio signal, including, but not being limited to: a sampling clock offset (= a difference in a sampling clock frequency between the transmitter and the receiver), an IQ imbalance (= a phase difference and a gain difference between an in-phase signal path and a quadrature signal path in the transmitter), and a phase noise (= noise spectrum at either side of the radio signal as a result of a phase jitter in a timing accuracy of the local oscillator).

With the described radio frequency fingerprinting of the CPE 230, the CPE 230 may be reliably recognized. By comparing the present and past radio frequency fingerprints, it may be detected whether the CPE 230 has changed. In this way, a spoofing by in illegitimate apparatus acting as the CPE 230 may be detected. Known techniques for recognizing the CPE 230 include inspecting a Service Set Identifier (SSID) of the CPE 230, inspecting a Basic Service Set Identifier (BSSID) of the CPE 230, inspecting a MAC physical address of the CPE 230, or signaling an identity of the access point CPE to the connected device 200. But these techniques may not be enough to detect the illegal CPE 230 spoofing.

If the method of FIG. 1C is part of the method of FIG. 1A, the operations 152, 154, 156, 158, 160, 162, 164, 166, 168, 170, and 172 are performed within the operation 108 and before the operation 110.

But, if the method of FIG. 1C is a stand-alone method, it starts in 150 and ends in 174.

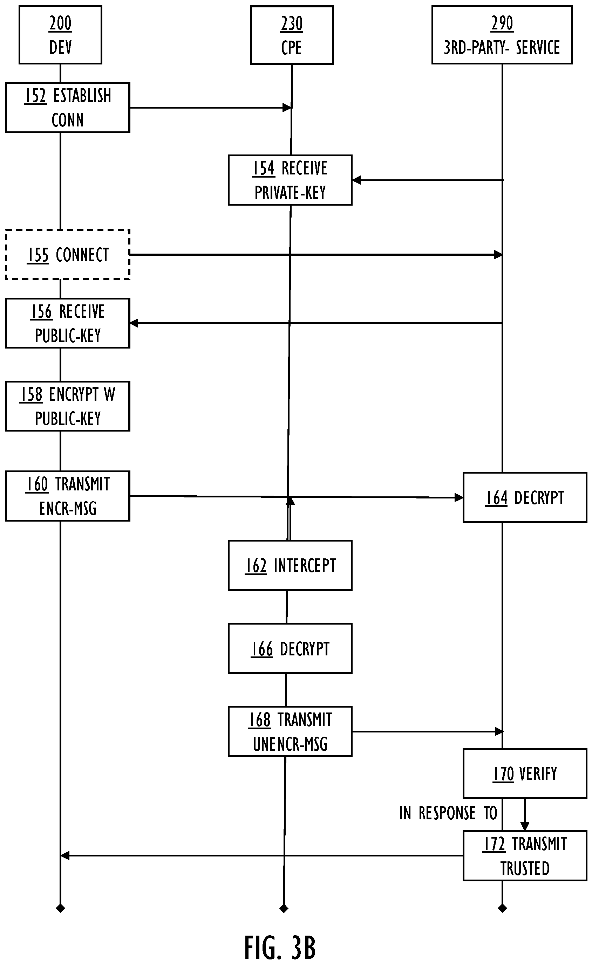

FIG. 3B is a sequence chart illustrating communication between various actors of the method of FIG. 1C.

The connected device 230 establishes 152 an encrypted wireless connection 282 to the CPE 230. For the method of FIG. 1A, this operation is implemented by the operation 106: the connected device 200 establishes 106 the first encrypted wireless connection 282 to the CPE 130.

The CPE 230 receives 154 via an encrypted connection 294 a private key of a public-key cryptography from a third party service 290.

The connected device 200 may optionally connect 155 to the third party service 290. Or there may be another mechanism for the third party service 155 to become aware of the connected device 200 being connected to the CPE 230.

The connected device 200 receives 156 via the (first) encrypted wireless connection 282, 292 a public key of the public-key cryptography from the third party service 290.

The connected device 200 encrypts 158 an unencrypted secret message using the public key to obtain an encrypted secret message.

The connected device 200 transmits 160 via the (first) encrypted first wireless connection 282, 292 the encrypted secret message (via the CPE 230) to the third party service 290.

The CPE 230 intercepts 162 the encrypted secret message.

The third party service 290 decrypts 164 the encrypted secret message using the private key to obtain a third party service unencrypted secret message.

The CPE 230 decrypts 166 the encrypted secret message using the private key to obtain a CPE unencrypted secret message.

The CPE 230 transmits 168 via an encrypted connection the third party service unencrypted secret message to the third party service 290.

In response to the third party service 290 verifying 170 that the third party service unencrypted secret message and the CPE unencrypted secret message are identical, the third party service transmits 172 via the (first) encrypted wireless connection 292, 282 a message instructing that the CPE 230 is trusted to the connected device 200.

In an example, the CPE 230 is configured to generate a wireless noncellular internet access network 222. The CPE 230 may be configured to operate at a home or an office of a user 210 of the connected device 200. In some examples, the CPE 230 may be implemented as an access point 230 configured to operate out of the home or the office of the user 210 as a hotspot serving the connected devices 200 in a public place such as a cafe, city center, shopping mall, airport, an arena, etc.

The connected device 200 may be configured to execute a website access application 202, such as web user interface application (a web browser, for example), or a stand-alone application (a mobile app, for example), and as a result, data communication is conveyed in the wireless connection 280 from the connected device 200 to an accessed website 240 via the LAN 222 and the WAN 224. The website access application 202 may automatically cause the data communication, or, alternatively, the data communication may be generated as a result of an action by a user 210 through user interface controls of the website access application 202.

The connected device 200 may create the wireless connection 280 using a packet protocol for the website access application 202 of the connected device 200 to the target website 240. The target website 240 may host a server application enabling access by the website access application 202. The packet protocols include, but are not limited to, Transmission Control Protocol/Internet Protocol (TCP/IP), User Datagram Protocol/Internet Protocol (UDP/IP), and QUIC, which establishes a multiplexed transport on top of the UDP. Various Hypertext Transfer Protocol/Hypertext Transfer Protocol Secure (HTTP/HTTPS) requests may then be transferred via the wireless connection 280 (using TCP streams or UDP datagrams, for example). In the Internet Protocol suite, the connection 280 is operated in a link layer, an internet layer, and a transport layer, and the requests transmitted in the wireless connection 280 are operated in an application layer.

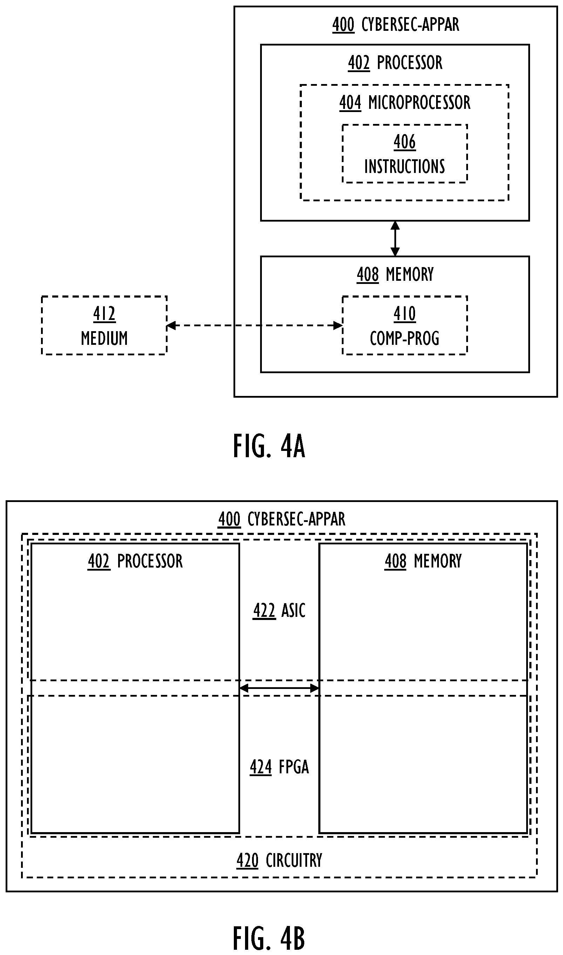

The radio signal of the wireless connection 280 may be intercepted by a cybersecurity apparatus 400 (described later with reference to FIG. 4A, and FIG. 4B), such as a cybersecurity client 252 operating in the CPE 230. The intercepted radio signal may be analyzed in order to perform a device identification procedure, by the cybersecurity client 252, possibly augmented by a cybersecurity server 254 operating in a networked computing resource 256. Machine learning algorithms may use a number of other data items (such as devicespecific unique radio interface characteristics, and other active and historic unique identifiers related to the connected apparatus and its communication) besides the radio frequency fingerprinting to enable the device identification.

In the above-described way, the device identification may be performed. The analysis of the intercepted radio signal may include collecting device traffic metadata and filtering relevant identification data points from network flow sent and received by the connected device 200 in the LAN 222 of the CPE 230. In addition to the analysis of raw data, or as an alternative, refined data (such as metadata) such as datasets, markers, connection requests, etc. may be analyzed. A suitable network flow monitoring technology, such as Cisco^{®} NetFlow or alternative network flow monitoring technologies (which may be implemented as a service of the operating system of the CPE 230) may be used to intercept the radio signal. NetFlow, or its equivalents collect IP network traffic as it enters or exits an interface (in the CPE 230, for example), and based on the collected traffic, a source and a destination of the network traffic (in the form of IP addresses) in the wireless connection 280 may be determined. The CPE 230 (or more specifically the cybersecurity client 252 running on the CPE 230) sends the data points extracted from the wireless connection 280 (by the NetFlow, for example) to the cybersecurity server 254. The cybersecurity server 254 feeds the data points to an analysis engine, which analyses the extracted data points and provides a model matching device identifier for the connected device 200 based on the data points. The analysis engine is able to detect that the connected device 200, even if it uses an obfuscated active MAC address, is in fact the connected device 200 that originally used an earlier MAC address. The active MAC address and the one or more earlier MAC addresses may be mapped to each other and stored in a database (or another data storage) of the cybersecurity server 254, and such mapped data may be passed back to a database (or other data storage, or even a cache) of the cybersecurity client 252.

As used herein, the term "intercepting" refers to user-approved lawful interception or monitoring of the radio signal in the wireless connection 280, with a purpose and goal of increasing cybersecurity related to the connected device 200 and its operating environment. As the radio signal of the wireless connection 280 is intercepted, the data communication is accessed and collected between the transmitting device and the receiving device. The data communication may be intercepted even if the digital data transmission units (such as messages) in the wireless connection 280 are addressed to the receiving device. The intercepting may be implemented so that the wireless connection 280 is passively monitored, i.e., the wireless connection 280 is not affected by the intercepting. Alternatively, if needed, the intercepting may include a seizing of the wireless connection 280, i.e., the wireless connection 280 is actively influenced so that a connection and/or requests and/or responses are blocked until it may be decided whether a cybersecurity action (such as blocking of the wireless connection 280) is required.

As used herein, the term "data communication" refers to the transmission and/or reception of (digital) data by the connected device 200. The data communication is transferred using digital data transmission units over a communication medium such as one or more communication channels in the wireless connection 280 between the connected device 200 and another network node such as the target website 240. Besides over radio interface, the data communication may be conveyed over another transmission medium (implemented by copper wires, or optical fibers, for example). The data are a collection of discrete values that convey information, or sequences of symbols that may be interpreted, expressed as a digital bitstream or a digitized analog signal, including, but not being limited to: text, numbers, image, audio, video, and multimedia. The data may be represented as an electromagnetic signal (such as an electrical voltage or a radio wave, for example). The digital transmission units may be transmitted individually, or in a series over a period of time, or in parallel over two or more communication channels, and include, but are not limited to: messages, protocol units, packets, and frames. One or more communication protocols may define a set of rules followed by the connected device 200 and other network nodes to implement the successful and reliable data communication over the wireless connection 280. The communication protocols may implement a protocol stack with different conceptual protocol layers.

The WAN such as the Internet 224 uses the Internet Protocol suite including TCP/IP and UDP/IP to globally connect computer networks so that communication is enabled between connected devices 200 and various Internet services provided typically by websites 240. The Internet 224 comprises public networks, private networks, academic networks, business networks, government networks, etc. interlinked with various networking technologies. The various services provide access to vast World Wide Web (WWW) resources, wherein webpages may be written with Hypertext Markup Language (HTML) or Extensible Markup Language (XML) and accessed by a browser or another application (such as a mobile app) running in the connected device 200.

From the cybersecurity point of view, the Internet services may be divided between legitimate services and fraud services. Legitimate services operate according to moral and ethical standards enforced by law, police, or social pressure. Fraud services do not follow moral and ethical standards, and often perform criminal acts to disclose, steal or damage electronic data, software, or hardware, or disrupt or misdirect services provided by the electronic data, software, and hardware. Fraud services may be fraudulent to the core, i.e., their only reason for existence is to perform malicious acts, but they may also be legitimate services as such, but being infected with malicious software so as to enable criminal acts. Various configurations of the connected device provided with a cybersecurity application 250, the CPE 230 provided with a cybersecurity client 252, and the computing resource 256 provided with a cybersecurity server 254 are used to enforce cybersecurity. As shown in FIG. 2A, FIG. 2B, and FIG. 2C, the cybersecurity application, 250, the cybersecurity client 252, and the cybersecurity server 254 may be communicatively coupled 270, 272, 274 with each other. Note that different service providers, such as network service providers, cloud service operators, and cybersecurity operators, just to name a few, may operate and/or manage the various network nodes shown in FIG. 2A, FIG. 2B, and FIG. 2C.

The CPE 230 is located at home or office of a user 210 of the connected device 200. The CPE 230 is stationary equipment connected to a telecommunication circuit of a carrier (such as a network service provider (NSP) offering internet access using broadband or fixed wireless technologies) at a demarcation point. The demarcation point may be defined as a point at which the public Internet 224 ends and connects with the LAN 222 at the home or office. In this way, the CPE 230 acts as a network bridge, and/or a router.

The CPE 230 may include one or more functionalities of a router, a network switch, a residential gateway (RGW), a fixed mobile convergence product, a home networking adapter, an Internet access gateway, or another access product distributing the communication services locally in a residence or in an enterprise via a (typically wireless) LAN 222 and thus enabling the user 210 of the connected device 200 to access communication services of the NSP, and the Internet 224. Note that the CPE 230 may also be implemented with wireless technology, such as a 4G or 5G access point 230 configured to exchange a 5G cellular radio network signal with the WAN 224 of a base station operated by the broadband service provider, and generate a Wi-Fi^{®} (or WLAN) or wired signal to implement the LAN 222 to provide access for the connected device 200. Furthermore, the 4G/5G CPE 230 performs the conversion between the 4G/5G cellular radio network signal and the Wi-Fi^{®} or wired signal.

FIG. 4A and FIG. 4B illustrate examples of a cybersecurity apparatus 400. The method described with reference to FIG. 1A, FIG. 1B, and FIG. 1C may be implemented at least partly by the cybersecurity apparatus 400, i.e., the MAC processing entity 262 of FIG. 2A may be implemented by the cybersecurity apparatus 400. The apparatus 400 may execute the operations defined in the method. The apparatus 400 may implement an algorithm, which includes at least the operations of the method, but may optionally include other operations related to the cybersecurity in general. Note that the methods described with reference to FIG. 1A, FIG. 1B, and FIG. 1C may be implemented as a part of the cybersecurity client 252 running in the CPE 230 as shown in FIG. 2A, FIG. 2B, and FIG. 2C or as a functionality embedded in the CPE 230. As shown in FIG. 2A, FIG. 2B, and FIG. 2C, the cybersecurity apparatus 400 may comprise various distributed actors communicatively coupled 270, 272, 274 with each other.

The apparatus 400 comprises one or more memories 408, and one or more processors 402 coupled to the one or more memories 408 configured to execute the operations described in FIG. 1A, FIG. 1B, and FIG. 1C.

The term "processor" 402 refers to a device that is capable of processing data. The term "memory" 408 refers to a device that is capable of storing data runtime (= working memory) or permanently (= non-volatile memory).

As shown in FIG. 4A, the one or more processors 402 may be implemented as one or more microprocessors 404, which are configured to execute instructions 406 of a computer program 410 stored on the one or memories 408. The microprocessor 404 implements functions of a central processing unit (CPU) on an integrated circuit. The CPU is a logic machine executing the instructions 406 of the computer program 410. The CPU may comprise a set of registers, an arithmetic logic unit (ALU), and a control unit (CU). The control unit is controlled by a sequence of the instructions 406 transferred to the CPU from the (working) memory 408. The control unit may contain a number of microinstructions for basic operations. The implementation of the microinstructions may vary, depending on the CPU design. The one or more microprocessors 404 may be implemented as cores of a single processor and/or as separate processors. Note that the term "microprocessor" is considered as a general term including, but not being limited to a digital signal processor (DSP), a digital signal controller, a graphics processing unit, a system on a chip, a microcontroller, a special-purpose computer chip, and other computing architectures employing at least partly microprocessor technology. The memory 508 comprising the working memory and the non-volatile memory may be implemented by a random-access memory (RAM), dynamic RAM (DRAM), static RAM (SRAM), a flash memory, a solid-state drive (SSD), PROM (programmable read-only memory), a suitable semiconductor, or any other means of implementing an electrical computer memory.

The computer program ("software") 410 may be written ("coded") by a suitable programming language, and the resulting executable code may be stored in the memory 408 and executed by the one or more microprocessors 404.

The computer program 410 implements the method/algorithm. The computer program 410 may be coded using a programming language, which may be a high-level programming language, such as Go, Java, C, or C++, or with a lowlevel programming language, such as an assembler or a machine language. The computer program 410 may be in source code form, object code form, executable file, or in some intermediate form, but for use in the one or more microprocessors 404 it is in an executable form as an application. There are many ways to structure the computer program 410: the operations may be divided into modules, subroutines, methods, classes, objects, applets, macros, etc., depending on the software design methodology and the programming language used. In modern programming environments, there are software libraries, i.e., compilations of ready-made functions, which may be utilized by the computer program 410 for performing a wide variety of standard operations. In addition, an operating system (such as a general-purpose operating system) may provide the computer program 410 with system services.

As shown in FIG. 4A, a computer-readable medium 412 may store the computer program 410, which, when executed by the apparatus 400 (the computer program 410 may first be loaded into the one or more microprocessors 404 as the instructions 406 and then executed by one or more microprocessors 404), causes the apparatus 400 (or the one or more microprocessors 404) to carry out the method/algorithm. The computer-readable medium 412 may be implemented as a non-transitory computer-readable storage medium, a computer-readable storage medium, a computer memory, a computer-readable data carrier (such as an electrical carrier signal), a data carrier signal (such as a wired or wireless telecommunications signal), or another software distribution medium capable of carrying the computer program 410 to the one or memories 408 of the apparatus 400. In some jurisdictions, depending on the legislation and the patent practice, the computer-readable medium 412 may not be the wired or wireless telecommunications signal.

As shown in FIG. 4B, the one or more processors 402 and the one or more memories 408 may be implemented by a circuitry 420. A non-exhaustive list of implementation techniques for the circuitry 420 includes, but is not limited to application-specific integrated circuits (ASIC) 422, field-programmable gate arrays (FPGA) 424, application-specific standard products (ASSP), standard integrated circuits, logic components, and other electronics structures employing custommade or standard electronic circuits.

Note that in modern computing environments a hybrid implementation employing both the microprocessor technology of FIG. 4A and the custom or standard circuitry of FIG. 4B is feasible.

Functionality of the apparatus 400, including the capability to carry out the method/algorithm, may be implemented in a centralized fashion by a stand-alone single physical unit, or alternatively in a distributed fashion using more than one communicatively coupled physical units. The physical unit may be a computer, or another type of a general-purpose off-the-shelf computing device, as opposed to a purpose-build proprietary equipment, whereby research and development costs will be lower as only the special-purpose software (and necessarily not the hardware) needs to be designed, implemented, tested, and produced. However, if highly optimized performance is required, the physical unit may be implemented with proprietary or standard circuitry as described earlier.

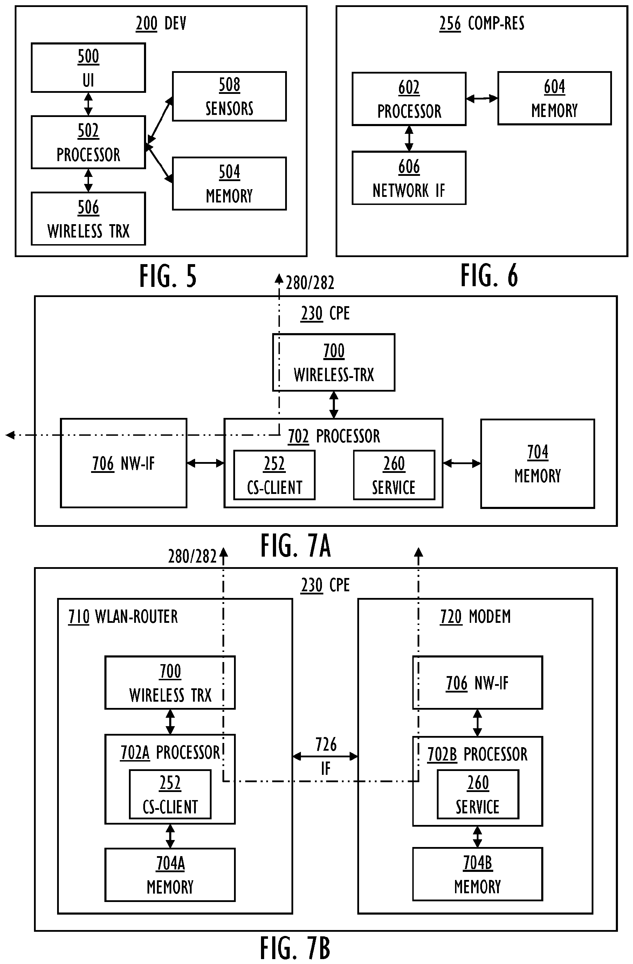

FIG. 5 illustrates an example of the connected device 200. The connected device 200 may be a terminal, a user equipment (UE), a radio terminal, a subscriber terminal, a smartphone, a mobile station, a mobile phone, a desktop computer, a portable computer, a laptop computer, a tablet computer, a smartwatch, smartglasses, or some other type of a wired or wireless mobile or stationary communication device operating with or without a subscriber identification module (SIM) or an embedded SIM (eSIM). The user apparatus 200 may be a personal communication device of the user 210. The connected device may also be an Internet of Things (IoT) device 200, which is provided with processing and communication technology and may also include one or more sensors and a user interface, and may be a stand-alone device, or an embedded device in a lighting fixture, thermostat, home security system, camera, smart lock, smart doorbell, smart refrigerator, or another household appliance, heating and cooling system, home and building automation system, vehicle, health and fitness monitor, remote health monitoring system, environmental sensor, IP camera, or network attached storage (NAS), etc.

As shown in FIG. 5, the connected device 200 comprises one or more memories 504, and one or more processors 502 coupled to the one or more memories 504 configured to carry out a part of the method/algorithm. In addition, the connected device 200 comprises a user interface 500 (such as a touch screen or one or more LEDs), and one or more wireless transceivers 506 (such as a WLAN transceiver, a cellular radio network transceiver, and a short-range radio transceiver), and also one or more sensors 508. As shown in FIG. 2A, FIG. 2B, and FIG. 2C, the connected device 200 may be running a cybersecurity application 250.

FIG. 6 illustrates an example of a computing resource 256 such as a server apparatus. The server apparatus 256 may be a networked computer server, which interoperates with the CPE 230 according to a client-server architecture, a cloud computing architecture, a peer-to-peer system, or another applicable distributed computing architecture. As shown in FIG. 6, the server apparatus 256 comprises one or more memories 604, and one or more processors 602 coupled to the one or more memories 604 configured to carry at least a part of the method/algorithm. In addition, the server apparatus 256 comprises a network interface (such as an Ethernet network interface card) 606 configured to couple the server apparatus 256 to the Internet 224. As shown in FIG. 2A, FIG. 2B, and FIG. 2C, the computing resource 256 may be running a cybersecurity application 254, such as a cybersecurity server application 254.

FIG. 7A and FIG. 7B illustrate examples of a customer-premises equipment 230.

In FIG. 7A, the CPE 230 is an integrated apparatus comprising one or more memories 704, and one or more processors 702 coupled to the one or more memories 704 configured to carry out the method/algorithm. Additionally, the CPE 230 comprises a wireless radio transceiver 700 configured to create the WLAN 222 for enabling access by the connected device 200. The CPE 230 also comprises a network interface 706 to act as a modem configured to connect to the telecommunication circuit of the carrier at the demarcation point, i.e., to the WAN 224. The network interface 706 may operate as a Digital Subscriber Line (DSL) modem using different variants such as Very high bitrate DSL (VDSL), Symmetric DSL (SDSL), or Asymmetric DSL (ADSL). The network interface 706 may also operate using alternative wired or even wireless access technologies including, but not being limited to: the Data Over Cable Service Interface Specification (DOCSIS), the Gigabit-capable Passive Optical Network (GPON), the Multimedia over Coax Alliance (MoCA^{®}), the Multimedia Terminal Adapter (MTA), and the fourth generation (4G), fifth generation (5G), or even a higher generation cellular radio network access technology. As shown in FIG. 2A, FIG. 2B, and FIG. 2C, the CPE 230 may be running a cybersecurity client 252. The CPE 230 is configured to implement the platform for the service 260. As shown in FIG. 7A, the platform may be provided by the one or more memories 704, and the one or more processors 702.

In FIG. 7B, the CPE 230 is a two-part apparatus. A WLAN router part 710 comprises the one or more memories 704A, the one or more processors 702A coupled to the one or more memories 704A configured to carry out the method/algorithm, and the wireless transceiver 700 to create the WLAN 222 for enabling access by the connected device 200. A modem part 720 comprises the one or more processors 702B coupled to one or more memories 704B configured to carry out modem operations, and the network interface 706 to act as the modem configured to connect to the WAN 224. The WLAN router part 710 may be purchased by the user 210 of the connected device 200 to gain access to the method/algorithm, whereas the modem part 720 may be provided by a carrier providing the telecommunication circuit access. As shown in FIG. 7B, the WLAN router part 710 and the modem part 720 may be communicatively coupled by an interface 726 (such as a wired Ethernet interface). As shown in FIG. 7B, the platform may be provided by the one or more memories 704A, and the one or more processors 702A, but also additionally, or alternatively, by the one or more memories 704B, and the one or more processors 702B.

Instead of the cybersecurity client 252 illustrated in FIG. 7A and FIG. 7B, another component running on the CPE 230 may be configured to run an algorithm implementing at least a part of the method of FIG. 1A, FIG. 1B, and FIG. 1C.

The CPE 230 may be implemented using proprietary software or using at least partly open software development kits. In an example, the Reference Design Kit for Broadband (RDK-B) may be used, but the implementation is not limited to that as it may be implemented in other applicable environments as well. At the time of writing of this patent application, more information regarding the RDK may be found in wiki.rdkcentral.com. Another alternative implementation environment is Open Wireless Router (OpenWrt^{®}), which is an open-source project for embedded operating systems of the CPE 230 based also on Linux. At the time of writing of this patent application, more information regarding the OpenWrt^{®} may be found in openwrt.org. In general, the CPE 230 may be configured to implement the platform for the service in the middleware (such as the RDK-B or the OpenWrt^{®}) of the CPE 230, and, in addition, the communication mechanisms enabling the access of data packets by the services 260 may be configured to operate in the middleware of the CPE 230.

As illustrated in FIG. 2A, the functionality of the MAC processing entity 262 including the capability to carry out a part of the method/algorithm, may be implemented in a centralized fashion by a stand-alone single physical unit 230, or alternatively in a distributed fashion using more than one communicatively coupled physical units 230, 256.

These physical units comprise the CPE 230 running the cybersecurity client 252, and the computing resource 256 running the cybersecurity server 254. The method/algorithm operations may be implemented by one or more of these apparatuses 230/256 executing the cybersecurity software 252/254.

As can be understood by the person skilled in the art, the method/algorithm operations may be distributed among the distributed software comprising the cybersecurity client 252, and the cybersecurity server 254 in different configurations. In an example, the cybersecurity client 252 communicates 274 with the cybersecurity server 254 to implement a part of the method/algorithm functionality.

Thus, the cybersecurity client 252 may comprise a stand-alone fashion to carry out the method/algorithm, or a part of the functionality augmented by the functionality of the cybersecurity server 254. The cybersecurity client 252 may operate as a frontend with a relatively limited resources as regards to the processor and memory, whereas the cybersecurity server 254 may operate as a backend with a relatively unlimited resources as regards to the processor and memory, and the capability to serve a very large number of the connected devices 200 simultaneously.

Even though the invention has been described with reference to one or more examples according to the accompanying drawings, it is clear that the invention is not restricted thereto but can be modified in several ways within the scope of the appended claims. All words and expressions should be interpreted broadly, and they are intended to illustrate, not to restrict, the examples. As technology advances, the inventive concept defined by the claims can be implemented in various ways.

## Claims

1. A computer-implemented method comprising:
receiving (112), by a customer-premises equipment, CPE, from a connected device via a first encrypted wireless connection, an active media access control, MAC, address and a true MAC address of the connected device;
receiving (114), by the CPE from the connected device via a second wireless connection, a data communication that contains the active MAC address of the connected device and omits the true MAC address of the connected device; and
in response to detecting (116), by the CPE, that the data communication is addressed to an internal service within the CPE, associating (118), by the CPE, the true MAC address of the connected device with the data communication, and transmitting (120), by the CPE to the internal service, the data communication that contains the active MAC address of the connected device and is associated with the true MAC address of the connected device.

2. The method of claim 1, further comprising:
in response to detecting (122), by the CPE, that the data communication is addressed to a destination other than in the CPE, transmitting (124), by the CPE, the data communication to the destination other than in the CPE.

3. The method of any preceding claim, further comprising:
establishing (106), by the connected device, the first encrypted wireless connection to the CPE; and
in response to detecting (108), by the connected device, that the CPE is trusted, transmitting (110), by the connected device to the CPE via the first encrypted wireless connection, the active MAC address and the true MAC address of the connected device.

4. The method of claim 3, wherein detecting (108), by the connected device, that the CPE is trusted further comprises:
generating (134), by the connected device, a present radio frequency fingerprint based on a present radio signal received from the CPE via the first encrypted wireless connection; and
in response to finding (136) a match of the present radio frequency fingerprint with one or more past radio frequency fingerprints of one or more past wireless connections to the CPE, determining (138) that the CPE is trusted.

5. The method of claim 4, further comprising:
in response to not finding (140) a match of the present radio frequency fingerprint with the one or more past radio frequency fingerprints of the one or more past wireless connections to the CPE, determining (142) that the CPE is not trusted.

6. The method of claim 3, wherein detecting (108), by the connected device, that the CPE is trusted further comprises:
receiving (154), by the CPE from a third party service via an encrypted connection, a private key of a public-key cryptography;
receiving (156), by the connected device from the third party service via the first encrypted wireless connection, a public key of the public-key cryptography;
encrypting (158), by the connected device, an unencrypted secret message using the public key to obtain an encrypted secret message;
transmitting (160), by the connected device to the third party service via the first encrypted wireless connection, the encrypted secret message;
intercepting (162), by the CPE, the encrypted secret message;
decrypting (164), by the third party service, the encrypted secret message using the private key to obtain a third party service unencrypted secret message;
decrypting (166), by the CPE, the encrypted secret message using the private key to obtain a CPE unencrypted secret message;
transmitting (168), by the CPE to the third party service via an encrypted connection, the third party service unencrypted secret message; and
in response to verifying (170), by the third party service, that the third party service unencrypted secret message and the CPE unencrypted secret message are identical, transmitting (172), by the third party service to the connected device via the first encrypted wireless connection, a message instructing that the CPE is trusted.

7. The method of any preceding, wherein the CPE is configured to implement (102) a local area network, LAN, for the data communication of the connected device, and an access for the data communication to a wide area network, WAN.

8. The method of any preceding claim, wherein the CPE is configured to implement (104) a platform for the internal service, and the internal service is configured to register the connected device with the true MAC address.

9. The method of any preceding claim, wherein the active MAC address comprises a randomized MAC address of the connected device.

10. The method of any preceding claim, wherein the true MAC address comprises one of a vendor-embedded MAC address, or a randomized MAC address used for an initial registration to the internal service within the CPE.

11. An apparatus comprising means for carrying out the method of any preceding claim 1-10.

12. A computer program product comprising instructions which, when executed by an apparatus, cause the apparatus to carry out the method of any preceding claim 1-10.

13. A computer-readable medium comprising a computer program with instructions which, when executed by an apparatus, cause the apparatus to carry out the method of any preceding claim 1-10.

14. A computer-implemented method comprising:
establishing (132), by a connected device, a wireless connection to a customer-premises equipment, CPE;
generating (134), by the connected device, a present radio frequency fingerprint based on a present radio signal received from the CPE via the wireless connection; and
in response to finding (136) a match of the present radio frequency fingerprint with one or more past radio frequency fingerprints of one or more past wireless connections to the CPE, determining (138) that the CPE is trusted.

15. A computer-implemented method comprising:
establishing (152), by a connected device, an encrypted wireless connection to a customer-premises equipment, CPE;
receiving (154), by the CPE from a third party service via an encrypted connection, a private key of a public-key cryptography;
receiving (156), by the connected device from the third party service via the encrypted wireless connection, a public key of the public-key cryptography;
encrypting (158), by the connected device, an unencrypted secret message using the public key to obtain an encrypted secret message;
transmitting (160), by the connected device via the encrypted wireless connection, the encrypted secret message via the CPE to the third party service;
intercepting (162), by the CPE, the encrypted secret message;
decrypting (164), by the third party service, the encrypted secret message using the private key to obtain a third party service unencrypted secret message;
decrypting (166), by the CPE, the encrypted secret message using the private key to obtain a CPE unencrypted secret message;
transmitting (168), by the CPE to the third party service via an encrypted connection, the third party service unencrypted secret message; and
in response to verifying (170), by the third party service, that the third party service unencrypted secret message and the CPE unencrypted secret message are identical, transmitting (172), by the third party service to the connected device via the encrypted wireless connection, a message instructing that the CPE is trusted.
